# EUROPEAN PATENT APPLICATION

(11) **EP 4 016 896 A1**
(43) Date of publication of application: **22.06.2022**
(21) Application number: 20852595.6
(22) Date of filing: 08.07.2020
(51) Int. Cl.: H04L 1/18, H04W 72/04

(54) **TRANSMISSION INDICATION METHOD AND DEVICE FOR HYBRID AUTOMATIC REPEAT REQUEST ACKNOWLEDGMENT**

(30) Priority: 14.08.2019 CN 201910750401
(71) Applicant: Datang Mobile Communications Equipment Co., Ltd., Beijing 100085 (CN)
(72) Inventor: SI, Qianqian, Beijing 100083 (CN); GAO, Xuejuan, Beijing 100083 (CN)
(74) Representative: Maiwald Patent- und Rechtsanwaltsgesellschaft mbH
(86) International application number: PCT/CN2020/100812
(87) International publication number: WO 2021/027443

(57) **Abstract**

This disclosure provides a method for indicating transmission of hybrid automatic repeat request acknowledgment, and a device. The method includes: receiving a downlink assignment index (DAI) from a network side device, wherein an information field of the DAI indicates the transmission of multiple hybrid automatic repeat request acknowledgment (HARQ-ACK) codebooks on a physical uplink shared channel (PUSCH).

## Description

### CROSS-REFERENCE TO RELATED APPLICATION

The present application claims a priority to the Chinese patent application No. 201910750401.1 filed in China on August 14, 2019, a disclosure of which is incorporated herein by reference in its entirety.

### TECHNICAL FIELD

The present disclosure relates to the field of communication technology, in particular to a method for indicating transmission of hybrid automatic repeat request acknowledgment, and a device.

### BACKGROUND

The simultaneous transmission of physical uplink control channel (PUCCH) and physical uplink shared channel (PUSCH) is not supported in the fifth-generation mobile communication technology (5G) New Radio (NR) system, so when the PUCCH and PUSCH overlap in time, uplink control information carried by the PUCCH needs to be transferred onto the PUSCH and multiplexed with data. When the hybrid automatic repeat request acknowledgment (HARQ-ACK) is multiplexed on the PUSCH, it is necessary to determine the corresponding HARQ-ACK codebook in conjunction with the downlink assignment index (DAI) indication field in the downlink control information (DCI) scheduling the PUSCH.

Specifically, when the UE is configured to use a semi-static codebook, when the UE multiplexes the HARQ-ACK on a PUSCH scheduled by DCI format 0_1, the DCI contains a 1-bit DAI field for indicating whether HARQ-ACK is transmitted on the scheduled PUSCH, and if a value of the DAI field in the DCI format 0_1 is 1, the UE determines, in accordance with a configuration of HARQ-ACK space combining on the PUSCH, the HARQ-ACK codebook to be transmitted on the PUSCH by reusing the process of determining HARQ-ACK codebook on the PUCCH. If the value of the DAI field in the DCI format 0_1 scheduling the PUSCH is 0, when the UE receives only one semi-persistent scheduling (SPS) PDSCH in the set of main carriers, or the UE receives one physical downlink shared channel (PDSCH) scheduled by DCI format 1_0 or receives one DCI format 1_0 indicating SPS PDSCH release and the DAI in the DCI format 1_0 has a value of 1, UE only generates 1-bit HARQ-ACK for the one received SPS PDSCH or the one PDSCH scheduled by DCI format 1_0 or the one DCI indicating SPS PDSCH release; otherwise, the UE does not multiplex the HARQ-ACK on the PUSCH.

When the UE is configured to use a dynamic codebook, if the UE is configured to employ single-carrier transmission, the DCI scheduling PDSCH transmission or indicating SPS PDSCH release contains only 2-bit C-DAI indication information and does not contain T-DAI. When the UE multiplexes HARQ-ACK on a PUSCH scheduled by DCI format 0_1, the DCI contains a DAI field of 2 or 4 bits to indicate whether HARQ-ACK transmission exists on the scheduled PUSCH and the quantity of bits of HARQ-ACK. If the UE is not configured to employ code block group (CBG)-based data transmission, the DCI format 0_1 contains a DAI of 2 bits. If the UE is configured to employ CBG-based data transmission, the DCI format 0_1 contains a DAI of 4 bits, where 2 bits correspond to the first sub-codebook and 2 bits correspond to the second sub-codebook.

However, when it is supported to use multiple time-division PUCCHs to carry HARQ-ACKs in one slot, it is not certain how to transfer the HARQ-ACKs carried by these PUCCHs onto the PUSCH for multiplexing transmission.

### SUMMARY

The purpose of the present disclosure is to provide a method for indicating transmission of hybrid automatic repeat request acknowledgment, and a device, to ensure transmission performance when multiple HARQ-ACK codebooks are multiplexed on a PUSCH.

To achieve the foregoing object, an embodiment of the present disclosure provides a method for indicating transmission of hybrid automatic repeat request acknowledgment, including:
receiving a downlink assignment index (DAI) from a network side device, wherein an information field of the DAI indicates transmission of multiple hybrid automatic repeat request acknowledgment (HARQ-ACK) codebooks on a physical uplink shared channel (PUSCH).

Optionally, the receiving the DAI from the network side device includes:
receiving downlink control information (DCI) from the network side device, wherein the DCI carries the DAI, and is used to schedule the PUSCH.

Optionally, the information field of the DAI includes N subfields, each subfield indicating transmission of one HARQ-ACK codebook on the PUSCH, N being an integer greater than or equal to 2.

Optionally, the N is:
a quantity of subslots configured in one slot; or
a maximum quantity of subslots that overlap with a length of a maximum PUSCH schedulable by the DCI; or
a predefined value; or
a value configured via higher layer signaling.

Optionally, each of the N subfields has X bits, X being an integer greater than or equal to 1.

Optionally, X=1 if the HARQ-ACK codebook corresponding to a current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

Optionally, the information field of the DAI includes indication information of Y bits, the indication information jointly indicating the transmission of the multiple HARQ-ACK codebooks on the PUSCH, Y being an integer greater than or equal to 1.

Optionally, the multiple HARQ-ACK codebooks are all semi-static codebooks, Y=1; wherein,
the indication information being 1 indicates that the multiple HARQ-ACK codebooks are all transmitted on the PUSCH, and the indication information being 0 indicates that the multiple HARQ-ACK codebooks are all not transmitted on the PUSCH.

Optionally, the multiple HARQ-ACK codebooks are all dynamic codebooks not configured for CBG-based transmission, Y=K, K being an integer greater than or equal to 1; wherein
the K-bit information indicates a maximum quantity of PDSCHs corresponding to the multiple HARQ-ACK codebooks.

Optionally, a feedback position in the current HARQ-ACK codebook that corresponds to not-received PDSCH transmission is supplemented with negative acknowledgement (NACK) in case that a quantity of PDSCHs corresponding to a current HARQ-ACK codebook in the multiple HARQ-ACK codebooks is less than the maximum quantity of PDSCHs.

Optionally, the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1; wherein,
the P-bit information indicates a quantity of PDSCHs corresponding to a first sub-codebook or an HARQ-ACK codebook not configured for CBG-based transmission in the multiple HARQ-ACK codebooks, and the Q-bit information indicates a quantity of PDSCHs corresponding to a second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Optionally, the multiple HARQ-ACK codebooks include a semi-static codebook and a dynamic codebook, and all of the dynamic codebooks are not configured for CBG-based transmission, Y=1+K;
the 1-bit information indicates whether all of the semi-static codebooks in the multiple HARQ-ACK codebooks are transmitted on the PUSCH.

Optionally, the multiple HARQ-ACK codebooks include a semi-static codebook and a dynamic codebook, and there is at least one dynamic codebook configured for CBG-based transmission, Y=1+P+Q; wherein,
the 1-bit information indicates whether all of the semi-static codebooks in the multiple HARQ-ACK codebooks are transmitted on the PUSCH.

Optionally, the multiple HARQ-ACK codebooks include a semi-static codebook and a dynamic codebook, Y being an integer greater than or equal to 2; wherein,
for the semi-static HARQ-ACK codebook, if corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

To achieve the foregoing objects, an embodiment of the present disclosure provides a method for indicating transmission of hybrid automatic repeat request acknowledgment, including:
sending a downlink assignment index (DAI), wherein an information field of the DAI indicates transmission of multiple hybrid automatic repeat request acknowledgment (HARQ-ACK) codebooks on a physical uplink shared channel (PUSCH).

Optionally, the sending the DAI including:
sending downlink control information (DCI), wherein the DCI carries the DAI, and is used to schedule the PUSCH.

Optionally, the information field of the DAI includes N subfields, each subfield indicating transmission of one HARQ-ACK codebook on the PUSCH, N being an integer greater than or equal to 2.

Optionally, the N is:
a quantity of subslots configured in one slot; or
a maximum quantity of subslots that overlap with a length of a maximum PUSCH schedulable by the DCI; or
a predefined value; or
a value configured via higher layer signaling.

Optionally, each of the N subfields has X bits, X being an integer greater than or equal to 1.

Optionally, X=1 if the HARQ-ACK codebook corresponding to the current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

Optionally, the information field of the DAI includes indication information of Y bits, the indication information jointly indicating the transmission of the multiple HARQ-ACK codebooks on the PUSCH, Y being an integer greater than or equal to 1.

Optionally, the multiple HARQ-ACK codebooks are all semi-static codebooks, Y=1;
the indication information being 1 indicates that the multiple HARQ-ACK codebooks are all transmitted on the PUSCH, and the indication information being 0 indicates that the multiple HARQ-ACK codebooks are all not transmitted on the PUSCH.

Optionally, wherein the multiple HARQ-ACK codebooks are all dynamic codebooks not configured for CBG-based transmission, Y=K, K being an integer greater than or equal to 1;
the K-bit indication information indicates a maximum quantity of PDSCHs corresponding to the multiple HARQ-ACK codebooks.

Optionally, the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1; wherein,
the P-bit information indicates a quantity of PDSCHs corresponding to a first sub-codebook or an HARQ-ACK codebook not configured for CBG-based transmission in the multiple HARQ-ACK codebooks, and the Q-bit information indicates a quantity of PDSCHs corresponding to a second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Optionally, the multiple HARQ-ACK codebooks include a semi-static codebook and a dynamic codebook, and all of the dynamic codebooks are not configured for CBG-based transmission, Y=1+K; wherein,
the 1-bit information indicates whether all the semi-static codebooks in the multiple HARQ-ACK codebooks are transmitted on the PUSCH.

Optionally, wherein the multiple HARQ-ACK codebooks include a semi-static codebook and a dynamic codebook, and there is at least one dynamic codebook configured for CBG-based transmission, Y=1+P+Q; wherein,
the 1-bit information indicates whether all the semi-static codebooks in the multiple HARQ-ACK codebooks are transmitted on the PUSCH.

Optionally, the multiple HARQ-ACK codebooks include a semi-static codebook and a dynamic codebook, Y being an integer greater than or equal to 2; wherein,
for the semi-static HARQ-ACK codebook, if corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

To achieve the foregoing object, an embodiment of the present disclosure provides user equipment, including a transceiver, a memory, a processor and a computer program stored in the memory and configured to be executed by the processor; the transceiver is used for:
receiving a downlink assignment index (DAI) from a network side device, wherein an information field of the DAI indicates transmission of multiple hybrid automatic repeat request acknowledgment (HARQ-ACK) codebooks on a physical uplink shared channel (PUSCH).

To achieve the foregoing object, an embodiment of the present disclosure provides a network side device, including a transceiver, a memory, a processor and a computer program stored in the memory and configured to be executed by the processor; the transceiver is used for:
sending a downlink assignment index (DAI), wherein an information field of the DAI indicates transmission of multiple hybrid automatic repeat request acknowledgment (HARQ-ACK) codebooks on a physical uplink shared channel (PUSCH).

To achieve the foregoing object, an embodiment of the present disclosure provides an apparatus for indicating transmission of hybrid automatic repeat request acknowledgment, including:
a receiving module, configured to receive a downlink assignment index (DAI) from a network side device, wherein an information field of the DAI indicates transmission of multiple hybrid automatic repeat request acknowledgment (HARQ-ACK) codebooks on a physical uplink shared channel (PUSCH).

To achieve the foregoing object, an embodiment of the present disclosure provides an apparatus for indicating transmission of hybrid automatic repeat request acknowledgment, including:
a sending module, configured to send a downlink assignment index (DAI), wherein an information field of the DAI indicates transmission of multiple hybrid automatic repeat request acknowledgment (HARQ-ACK) codebooks on a physical uplink shared channel (PUSCH).

To achieve the foregoing object, an embodiment of the present disclosure provides a computer-readable storage medium storing thereon a computer program, wherein, the computer program is configured to be executed by a processor to implement the steps of the above method for indicating transmission of hybrid automatic repeat request acknowledgment applied to user equipment, or the steps of the above method for indicating transmission of hybrid automatic repeat request acknowledgment applied to a network side device.

The beneficial effects of the above-mentioned technical solution of the present disclosure are as follows:

The method of the embodiments of the present disclosure receives a DAI from a network side device, and since the information field of the DAI indicates transmission of multiple HARQ-ACK codebooks on a PUSCH, an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

### BRIEF DESCRIPTION OF THE DRAWINGS

Fig. 1 is a schematic flowchart of a method for indicating transmission of hybrid automatic repeat request acknowledgment according to an embodiment of the present disclosure;
Fig. 2 is another schematic flowchart of a method for indicating transmission of hybrid automatic repeat request acknowledgment according to an embodiment of the present disclosure;
Fig. 3 is a schematic structural diagram of user equipment according to an embodiment of the present disclosure;
Fig. 4 is a schematic structural diagram of a network side device according to an embodiment of the present disclosure;
Fig. 5 is a schematic structural diagram of an apparatus for indicating transmission of hybrid automatic repeat request acknowledgment according to an embodiment of the present disclosure;
Fig. 6 is a schematic structural diagram of an apparatus for indicating transmission of hybrid automatic repeat request acknowledgment according to another embodiment of the present disclosure.

### DETAILED DESCRIPTION

In order to make the technical problem to be solved, the technical solutions and advantages of the present disclosure clearer, the present disclosure will be described in detail below with reference to the drawings and specific embodiments.

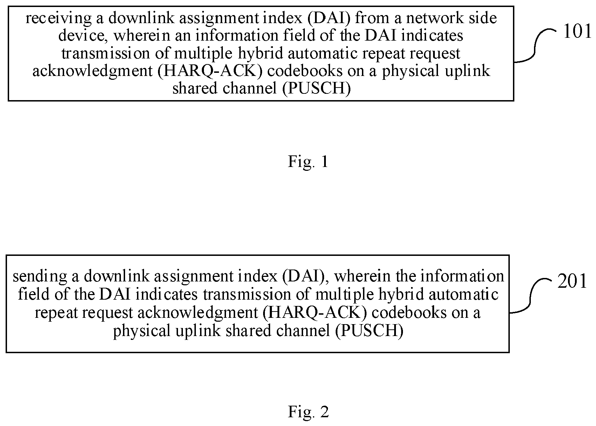

As shown in Fig. 1, an embodiment of the present disclosure provides a method for indicating transmission of hybrid automatic repeat request acknowledgment, including:
step 101, receiving a downlink assignment index (DAI) from a network side device, wherein an information field of the DAI indicates transmission of multiple hybrid automatic repeat request acknowledgment (HARQ-ACK) codebooks on a physical uplink shared channel (PUSCH).

With the above step, the method of the embodiment of the present disclosure, applied to user equipment, receives a DAI from a network side device, and since the information field of the DAI indicates transmission of multiple HARQ-ACK codebooks on a PUSCH, an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

Optionally, the receiving the DAI from the network side device includes:
receiving downlink control information (DCI) from a network side device, wherein the DCI carries the DAI and is used to schedule the PUSCH.

Here, the network side device informs the user equipment by carrying the DAI in the DCI scheduling the PUSCH.

In the embodiment, in one aspect, optionally, the information field of the DAI includes N subfields, each subfield indicates transmission status of one HARQ-ACK codebook on the PUSCH, N being an integer greater than or equal to 2.

In this way, the information field of the DAI is divided into N subfields, where N is the maximum quantity of HARQ-ACK codebooks that may be multiplexed on the PUSCH, and each subfield indicates transmission of one HARQ-ACK codebook on the PUSCH. Assuming that a maximum of 3 HARQ-ACK codebooks may be multiplexed on the PUSCH (HARQ-ACK codebook 1, HARQ-ACK codebook 2 and HARQ-ACK codebook 3), i.e., N=3, and 3 subfields correspond to 3 HARQ-ACK codebooks in a one-to-one manner, the 3 subfields of the information field of the DAI (subfield A, subfield B and subfield C) each may indicate transmission of one respective HARQ-ACK codebook on the PUSCH. For example, the subfield A may indicate the transmission of HARQ-ACK codebook 1 on the PUSCH, the subfield B may indicate the transmission of HARQ-ACK codebook 2 on the PUSCH, and the subfield C may indicate the transmission of HARQ-ACK codebook 3 on the PUSCH.

Optionally, the N is:
the quantity of subslots configured in one slot; or
the maximum quantity of subslots that overlap with a length of a maximum PUSCH schedulable by the DCI; or
the predefined value; or
the value configured via higher layer signaling.

Here, N may be the quantity of subslots configured in one slot, or may be the maximum quantity of sub-slots that overlap with a length of a maximum PUSCH that can be scheduled by DCI, or may be predefined, or may be configured via higher layer signaling. If a length of a maximum PUSCH that can be scheduled by DCI is 5 symbols and it is pre-configured that the quantity of subslots in one slot is 7, i.e., the length of each subslot is 2 symbols, then the maximum quantity of subslots that overlap with a length of a maximum PUSCH that can be scheduled by DCI is 3, i.e., N=3.

Optionally, each of the N subfields has X bits, X being an integer greater than or equal to 1.

In this way, the indication of transmission of one HARQ-ACK codebook on the PUSCH is completed by X-bit information in each subfield.

It should be known that the HARQ-ACK codebook is mainly categorized into semi-static codebook and dynamic codebook, and the dynamic codebook is further categorized based on whether it is configured for CBG-based transmission. Therefore, in this embodiment, optionally, X=1 if the HARQ-ACK codebook corresponding to the current subfield is a semi-static codebook;

X=2 if the HARQ-ACK codebook corresponding to the current subfield is a dynamic codebook not configured for CBG-based transmission;

X=4 if the HARQ-ACK codebook corresponding to the current subfield is a dynamic codebook configured for CBG-based transmission.

In this way, in the case that the HARQ-ACK codebook corresponding to the current subfield is a semi-static codebook, the indication may be done via 1-bit information of this subfield; in the case that the HARQ-ACK codebook corresponding to the current subfield is a dynamic codebook not configured for CBG-based transmission, the indication may be done via 2-bit information of this subfield; in the case that the HARQ-ACK codebook corresponding to the current subfield is a dynamic codebook configured for CBG-based transmission, the indication may be done via 4-bit information of this subfield. Of course, different subfields in the information field of the DAI may include different quantities of bits of information.

In this embodiment, in another aspect, optionally, the information field of the DAI includes indication information of Y bits, the indication information jointly indicates transmission of multiple HARQ-ACK codebooks on the PUSCH, Y being an integer greater than or equal to 1.

Here, different from the indication based on one-to-one correspondence of subfields with HARQ-ACK codebooks, the information field of the DAI jointly indicates, by means of Y-bit indication information, the transmission status of multiple HARQ-ACK codebooks on the PUSCH.

Optionally, the multiple HARQ-ACK codebooks are all semi-static codebooks, Y=1; wherein,
the indication information being 1 indicates that the multiple HARQ-ACK codebooks are all transmitted on the PUSCH, and the indication information being 0 indicates that the multiple HARQ-ACK codebooks are all not transmitted on the PUSCH.

In this way, in the case that the multiple HARQ-ACK codebooks are all semi-static codebooks, 1-bit indication information is 1, then all of the multiple HARQ-ACK codebooks are transmitted on the PUSCH; 1-bit indication information is 0, then all of the multiple HARQ-ACK codebooks are not transmitted on the PUSCH.

Optionally, the multiple HARQ-ACK codebooks are all dynamic codebooks not configured for CBG-based transmission, Y=K, K being an integer greater than or equal to 1; wherein,
the K-bit information indicates the maximum quantity of PDSCHs corresponding to the multiple HARQ-ACK codebooks.

Here, in the case that multiple HARQ-ACK codebooks are all dynamic codebooks not configured for CBG-based transmission, Y=K, the K-bit information is determined based on the maximum quantity of PDSCHs (maximum quantity of scheduled PDSCHs) corresponding to the multiple HARQ-ACK codebooks. The K is 2, i.e., the maximum quantity of PDSCHs corresponding to multiple HARQ-ACK codebooks is indicated by 2 bits. If the maximum quantity of PDSCHs corresponding to multiple HARQ-ACK codebooks is 4, then the K-bit information is 11; if the maximum quantity of PDSCHs corresponding to multiple HARQ-ACK codebooks is 7, then the K-bit information is 10.

If the quantity of PDSCHs corresponding to the current HARQ-ACK codebook in the multiple HARQ-ACK codebooks is less than the maximum quantity of PDSCHs, then the feedback position in the current HARQ-ACK codebook that corresponds to not-received PDSCH transmission is supplemented with negative acknowledgement (NACK).

Optionally, the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1; wherein
the P-bit information indicates the quantity of PDSCHs corresponding to a first sub-codebook or an HARQ-ACK codebook not configured for CBG-based transmission in the multiple HARQ-ACK codebooks, and the Q-bit information indicates the quantity of PDSCHs corresponding to a second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Here, in the case that the multiple HARQ-ACK codebooks are all dynamic codebooks and there is at least one HARQ-ACK codebook configured for CBG-based transmission, the Y-bit indication information is divided into two parts: the P-bit information and the Q-bit information. The P-bit information indicates the quantity of PDSCHs corresponding to the first sub-codebook or the HARQ-ACK codebook not configured for CBG-based transmission in the multiple HARQ-ACK codebooks, and the Q-bit information indicates the quantity of PDSCHs corresponding to the second sub-codebook in the multiple HARQ-ACK codebooks.

For example, with P=2 and Q=2, the DAI information field indicates jointly with 4-bit information the transmission of the multiple HARQ-ACK codebooks on the PUSCH. The first 2-bit information indicates the quantity of PDSCHs corresponding to the first sub-codebook or the HARQ-ACK codebook not configured for CBG-based transmission in the multiple HARQ-ACK codebooks, and the second 2-bit information indicates the quantity of PDSCHs corresponding to the second sub-codebook in the multiple HARQ-ACK codebooks.

Optionally, the multiple HARQ-ACK codebooks include a semi-static codebook and a dynamic codebook, and all of the dynamic codebooks are not configured for CBG-based transmission, Y=1+K; wherein the 1-bit information indicates whether all the semi-static codebooks of the multiple HARQ-ACK codebooks are transmitted on the PUSCH.

Here, in the case that the multiple HARQ-ACK codebooks include a semi-static codebook and a dynamic codebook, and all of the dynamic codebooks are not configured for CBG-based transmission, the Y-bit indication information is divided into two parts: 1-bit information and K-bit information. The 1-bit information indicates whether all the semi-static codebooks in the multiple HARQ-ACK codebooks are transmitted on the PUSCH. The 1-bit information being 1 indicates that all the semi-static codebooks in the multiple HARQ-ACK codebooks are transmitted on the PUSCH, and the 1-bit information being 0 indicates that all the semi-static codebooks in the multiple HARQ-ACK codebooks are not transmitted on the PUSCH. The K-bit information is similar to the above case where the multiple HARQ-ACK codebooks are all dynamic codebooks not configured for CBG-based transmission, and indicates the maximum quantity of PDSCHs corresponding to the dynamic HARQ-ACK codebooks in the multiple HARQ-ACK codebooks.

Optionally, the multiple HARQ-ACK codebooks include a semi-static codebook and a dynamic codebook, and there is at least one dynamic codebook configured for CBG-based transmission, Y=1+P+Q; wherein,
the 1-bit information indicates whether all semi-static codebooks in the multiple HARQ-ACK codebooks are transmitted on the PUSCH.

Here, in the case that the multiple HARQ-ACK codebooks include a semi-static codebook and a dynamic codebook, and at least one dynamic codebook is configured for CBG-based transmission, the Y-bit indication information is divided into three parts: 1-bit information, P-bit information, and Q-bit information. The 1-bit information indicates whether all semi-static codebooks of the multiple HARQ-ACK codebooks are transmitted on the PUSCH, and the 1-bit information being 1 indicates that all semi-static codebooks of the multiple HARQ-ACK codebooks are transmitted on the PUSCH, and the 1-bit information being 0 indicates that all semi-static codebooks of the multiple HARQ-ACK codebooks are not transmitted on the PUSCH. The P-bit information and the Q-bit information are similar to the above case where the multiple HARQ-ACK codebooks are all dynamic codebooks and there is at least one HARQ-ACK codebook configured for CBG-based transmission, the P-bit information indicates the quantity of PDSCHs corresponding to the first sub-codebook or the HARQ-ACK codebook not configured for CBG-based transmission in the dynamic HARQ-ACK codebooks in the multiple HARQ-ACK codebooks; and the Q-bit information indicates the quantity of PDSCHs corresponding to the second sub-codebook in the dynamic HARQ-ACK codebook in the multiple HARQ-ACK codebooks.

Optionally, the multiple HARQ-ACK codebooks include a semi-static codebook and a dynamic codebook, Y being an integer greater than or equal to 2; wherein,
for the semi-static HARQ-ACK codebook, if the corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

Here, in the case that the multiple HARQ-ACK codebooks includes a semi-static codebook and a dynamic codebook, if the user equipment does not receive corresponding PDSCH transmission and the Y-bit indication information indicates that no corresponding PDSCH transmission exists, then no HARQ-ACK codebook, whether the semi-static HARQ-ACK codebook or the dynamic HARQ-ACK codebook, is transmitted on the PUSCH; otherwise, the HARQ-ACK codebook is transmitted on the PUSCH.

The application of the methods of embodiments of the present disclosure is illustrated below, with reference to specific scenarios.

Scenario 1, the user equipment is configured with one carrier for transmitting Ultra-Reliable and Low Latency Communications (URLLC) services at a subcarrier spacing of 15 kHz, and two subslots for HARQ-ACK feedback are configured in one slot, thus up to two HARQ-ACK codebooks may be multiplexed on the PUSCH transmitted on the carrier.

Case 1, the user equipment is configured to use semi-static codebooks for HARQ-ACK feedback on the current carrier, and the DAI information field contains 2 bits which indicate the transmission statuses of the two HARQ-ACK codebooks on the PUSCH, respectively. Here, the DAI information field contains 2 subfields, each subfield containing 1-bit information, i.e., N=2 and X=1.

The information field of the DAI being 00 indicates that no HARQ-ACK is multiplexed on the current PUSCH;
the information field of the DAI being 10 indicates that the HARQ-ACK in the first subslot of the slot where the PUSCH is located needs to be multiplexed on the current PUSCH;
the information field of the DAI being 01 indicates that the HARQ-ACK in the second subslot of the slot where the PUSCH is located needs to be multiplexed on the current PUSCH;
the information field of the DAI being 11 indicates that the HARQ-ACKs in both subslots of the slot where the PUSCH is located need to be multiplexed on the current PUSCH.

Case 2, the user equipment is configured to use semi-static codebooks for HARQ-ACK feedback on the current carrier, and the DAI information field contains 1 bit to jointly indicate the transmission statuses of the two HARQ-ACK codebooks on the PUSCH, i.e., Y=1.

The information field of the DAI being 0 indicates that no HARQ-ACK is multiplexed on the current PUSCH;
the information field of the DAI being 1 indicates that both the HARQ-ACK in the first subslot of the slot where the PUSCH is located and the HARQ-ACK in the second subslot of the slot where the PUSCH is located need to be multiplexed on the current PUSCH.

Case 3, the user equipment is configured to use dynamic codebooks for HARQ-ACK feedback on the current carrier and is not configured for CBG-based transmission, the DAI information field contains 4 bits to indicate the transmission statuses of the two HARQ-ACK codebooks on the PUSCH. Here, the DAI information field contains 2 subfields, each subfield contains 2 bits of information. The first 2 bits correspond to the multiplexing transmission status of the HARQ-ACK codebook on the PUSCH in the first subslot of the slot where the PUSCH is located, and the last 2 bits correspond to the multiplexing transmission status of the HARQ-ACK codebook on the PUSCH in the second subslot of the slot where the PUSCH is located , i.e., N=2 and X=2.

Assuming the information field of the DAI is 0111, the first 2 bits of information indicate that the HARQ-ACK codebook in the first subslot of the slot where the PUSCH is located corresponds to 2 PDSCH transmissions requiring feedback, and the last two bits indicate that the HARQ-ACK codebook in the second subslot of the slot in which the PUSCH is located corresponds to 4 PDSCH transmissions requiring feedback. Assuming that the PDSCHs are all TB-based transmission, the user equipment determines that the HARQ-ACK codebook fed-back on the PUSCH contains 2+4 bits, i.e., 6 bits. Therefore, when all PDSCH transmissions are correctly received by the user equipment, the user equipment feeds back 111111.

Case 4, the user equipment is configured to use dynamic codebooks for HARQ-ACK feedback on the current carrier and is not configured for CBG-based transmission, the DAI information field contains 2 bits to jointly indicate the transmission statuses of the two HARQ-ACK codebooks on the PUSCH, i.e., Y=K=2.

Assuming the information field of the DAI is 11, it indicates that the HARQ-ACK codebook in the first subslot of the slot where the PUSCH is located corresponds to 4 PDSCH transmissions requiring feedback, and the HARQ-ACK codebook in the second subslot of the slot where the PUSCH is located also corresponds to 4 PDSCH transmissions requiring feedback. Assuming that the PDSCHs are all single-TB transmission, the user equipment determines that the HARQ-ACK codebook to be fed back on the PUSCH contains 4+4 bits, i.e., 8 bits. Therefore, when all PDSCH transmissions are correctly received by the user equipment, the user equipment feeds back 10001111. Since the bit quantity K of the information field in the DAI is set according to the maximum quantity of PDSCHs corresponding to multiple HARQ-ACK codebooks, the base station may not actually schedule so many PDSCH transmissions. The first to fourth bits in the feedback codebook being "1000" means that the base station actually schedules one PDSCH transmission that requires feedback in the HARQ-ACK codebook in the first subslot of the slot where the PUSCH is located.

Case 5, the user equipment is configured to use dynamic codebooks for HARQ-ACK feedback on the current carrier and is configured for CBG-based transmission, and the DAI information field contains 8 bits to indicate the transmission statuses of the two HARQ-ACK codebooks on the PUSCH. Here, the DAI information field contains 2 subfields, and each subfield contains 4 bits of information. The first 4 bits of information correspond to the multiplexing transmission status of the HARQ-ACK codebook on the PUSCH in the first subslot of the slot where the PUSCH is located, and the last 4 bits of information correspond to the multiplexing transmission status of the HARQ-ACK codebook on the PUSCH in the second subslot of the slot where the PUSCH is located, i.e., N=2 and X=4.

Assuming that the information field of the DAI is 11100100, it indicates that the first HARQ-ACK sub-codebook in the first subslot of the slot where the PUSCH is located corresponds to 4 PDSCH transmissions requiring feedback, the second HARQ-ACK sub-codebook in the first subslot of the slot where the PUSCH is located corresponds to 3 PDSCH transmissions requiring feedback, the first HARQ-ACK sub-codebook in the second subslot of the slot where the PUSCH is located corresponds to 2 PDSCH transmissions requiring feedback, and the second HARQ-ACK sub-codebook in the second subslot of the slot where the PUSCH is located corresponds to 1 PDSCH transmission requiring feedback. Assuming that the quantity of configured CBGs is 2, the user equipment determines that the HARQ-ACK codebook to be fed back on the PUSCH contains 4+3^{∗}2+2+1^{∗}2 bits, i.e., 14 bits, wherein the first 4 bits correspond to the first HARQ-ACK sub-codebook in the first subslot of the slot where the PUSCH is located, the 5th to 10th bits correspond to the second HARQ-ACK sub-codebook in the first subslot of the slot where the PUSCH is located, the 11th to 12th bits correspond to the first HARQ-ACK sub-codebook in the second subslot of the slot where the PUSCH is located, and the 13th to 14th bits correspond to the second HARQ-ACK sub-codebook in the second subslot of the slot where the PUSCH is located.

Case 6, the user equipment is configured to use dynamic codebooks for HARQ-ACK feedback on the current carrier and is configured for CBG-based transmission, the DAI information field contains 4 bits to jointly indicate the transmission statuses of the two HARQ-ACK codebooks on the PUSCH, i.e., Y= P+Q=2+2.

Assuming that the information field of the DAI is 0101, it indicates that the first HARQ-ACK sub-codebooks in both subslots of the slot where the PUSCH is located correspond to 2 PDSCH transmissions requiring feedback, and the second HARQ-ACK sub-codebooks in both subslots of the slot where the PUSCH is located correspond to 2 PDSCH transmissions requiring feedback. Assuming that the quantity of configured CBGs is 2, the user equipment determines that the HARQ-ACK codebook to be fed back on the PUSCH contains 2+2^{∗}2+2+2^{∗}2 bits, i.e., 12 bits, where the first 2 bits correspond to the first HARQ-ACK sub-codebook in the first subslot of the slot where the PUSCH is located, and the 3rd to 6th bits correspond to the second HARQ-ACK sub-codebook in the first subslot of the slot where the PUSCH is located, the seventh to eighth bits correspond to the first HARQ-ACK sub-codebook in the second subslot of the slot where the PUSCH is located, and the ninth to twelfth bits correspond to the second HARQ-ACK sub-codebook in the second subslot of the slot where the PUSCH is located. When all PDSCH transmissions are correctly received by the user equipment, the user equipment feeds back 111111101100. Since the information field of the DAI is set according to the maximum value corresponding to multiple sub-codebooks, the base station may not actually schedule so many PDSCH transmissions, for example, the 7th to 8th bits in the feedback codebook being "10" represents that the base station actually schedules one PDSCH transmission requiring feedback in the first HARQ-ACK codebook in the second subslot of the slot where the PUSCH is located, and the 9th to 12th bits in the feedback codebook being " 1100" represents that the base station actually schedules one CBG-based PDSCH transmission requiring feedback in the second HARQ-ACK codebook in the second subslot of the slot where the PUSCH is located.

Scenario 2, the user equipment is configured for both enhanced mobile broadband (eMBB) and URLLC services on one carrier, both at a subcarrier spacing of 15 kHz, and two subslots for HARQ-ACK feedback are configured in one slot, thus up to three HARQ-ACK codebooks may be multiplexed on the PUSCH transmitted on the carrier, among which one HARQ-ACK codebook is an HARQ-ACK feedback codebook for eMBB and two HARQ-ACK codebooks are HARQ-ACK feedback codebooks for URLLC. It is configured to provide feedback for eMBB by using semi-static codebook and provide HARQ-ACK feedback for URLLC services by using dynamic codebook and CBG-based transmission is not configured, and the DAI information field indicates the transmission statuses of the three HARQ-ACK codebooks on the PUSCH.

Case 1, the DAI information field contains 3 bits to jointly indicate the transmission statuses of three HARQ-ACK codebooks on the PUSCH, i.e., Y=1+K=1+2.

Assuming that the information field of the DAI is 101, the first bit indicates that all semi-static codebooks need to be multiplexed on the PUSCH, and the last two bits indicate that all dynamic codebooks correspond to 2 PDSCH transmissions requiring feedback. Assuming that the semi-static codebook for eMBB corresponds to 5 bits of feedback information, the user equipment determines that the HARQ-ACK codebook to be fed back on the PUSCH contains a total of 5+2+2 bits, i.e., 9 bits. When all PDSCH transmissions are correctly received by the user equipment, the user equipment feeds back 100111100. The first 5 bits correspond to the semi-static codebook, wherein 0 indicates that the base station does not schedule transmission in the corresponding PDSCH transmission position, the 6th to 7th bits correspond to the dynamic codebook in the first subslot of the slot where the PUSCH is located, and the 8th and 9th bits correspond to the dynamic codebook of the second subslot of the slot where the PUSCH is located. Since the bit quantity K of the information field in the DAI is set according to the maximum quantity of PDSCHs corresponding to multiple HARQ-ACK codebooks, the base station may not actually schedule so many PDSCHs, the 8th to 9th bits in the feedback codebook being "00" represents that the base station does not actually schedule URLLC PDSCH transmission requiring feedback in the second subslot of the slot where the PUSCH is located.

Case 2, the information field of the DAI contains 2 bits to jointly indicate the transmission statuses of three HARQ-ACK codebooks on the PUSCH, i.e., Y=2.

Assuming that the information field of the DAI is 01, it indicates that all semi-static codebooks need to be multiplexed on the PUSCH and all dynamic codebooks correspond to 2 PDSCH transmissions requiring feedback. The actual feedback behavior of the user equipment (UE) is the same as in the above case 1.

Case 3, the information field of the DAI contains 2 bits to jointly indicate the transmission statuses of three HARQ-ACK codebooks on the PUSCH, i.e., Y=2.

Assuming that the information field of the DAI is 11, if PDSCH transmission corresponding to a semi-static codebook is received by the UE, these two bits indicate that all semi-static codebooks need to be multiplexed on the PUSCH; if the UE fails to receive the PDSCH transmission corresponding to a semi-static codebook, these two bits indicate that no semi-static codebooks need to be multiplexed on the PUSCH. For any dynamic codebook, if the corresponding PDSCH transmission is received by the UE, these two bits indicate that the corresponding dynamic codebook needs to be multiplexed on the PUSCH, and the HARQ-ACK feedback bits of the corresponding dynamic codebook that are multiplexed on the PUSCH are determined based on the received PDSCH and the corresponding downlink DAI. For example, a PDSCH transmission with a downlink DAI of 2 and a PDSCH transmission with a downlink DAI of 3 are received by the UE, and the UE is required to provide feedback in the first subslot of the PUSCH transmission slot, then the UE determines based on the downlink DAIs that the quantity of corresponding feedback bits is 4, and when both PDSCH transmissions are correctly received, the UE feeds back 0110 as the dynamic codebook. Meanwhile, a PDSCH transmission with a downlink DAI of 2, a PDSCH transmission with a downlink DAI of 3 and a PDSCH transmission with a downlink DAI of 4 are received by the UE, and the UE is required to provide feedback in the second subslot of the PUSCH transmission slot, then the UE determines based on the downlink DAIs that the quantity of corresponding feedback bits is 4, and when all three PDSCH transmissions are correctly received, the UE feeds back 0111 as the dynamic codebook. In the case that the UE correctly receives the PDSCH transmissions corresponding to all the semi-static codebooks and dynamic codebooks, the HARQ-ACK codebook multiplexed by the UE on the PUSCH is 1100101100111, wherein the first 5 bits correspond to the semi-static codebook, where 0 represents that the base station does not schedule transmission at the corresponding PDSCH transmission position, the 6th to 9th bits correspond to the dynamic codebook in the first subslot of the slot where the PUSCH is located, and the 10th to 13th bits correspond to the dynamic codebook in the second subslot of the slot where the PUSCH is located.

It should be understood, in the embodiment, after the user equipment receives the DAI from the network side device, the user equipment can further transmit the multiple HARQ-ACKs on the PUSCH based on the information field of the DAI.

In summary, according to the method of the embodiment of the present disclosure, a DAI is received from a network side device, and since the information field of the DAI indicates transmission of multiple HARQ-ACK codebooks on a PUSCH, an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

As shown in Fig. 2, an embodiment of the present disclosure provides a method for indicating transmission of hybrid automatic repeat request acknowledgment, including:
a step 201, sending a downlink assignment index (DAI), wherein the information field of the DAI indicates transmission of multiple hybrid automatic repeat request acknowledgment (HARQ-ACK) codebooks on a physical uplink shared channel (PUSCH).

With the above step, the network side device to which the method of the embodiment of the present disclosure is applied sends a DAI, wherein the information field of the DAI indicates transmission of multiple HARQ-ACK codebooks on a PUSCH, the user equipment receives the DAI, such that an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

Optionally, the sending the DAI includes:
sending downlink control information (DCI), wherein the DCI carries the DAI and is used to schedule the PUSCH.

Optionally, the information field of the DAI includes N subfields, and each subfield indicates transmission of one HARQ-ACK codebook on the PUSCH, N being an integer greater than or equal to 2.

Optionally, the N is:
the quantity of subslots configured in one slot; or
the maximum quantity of subslots that overlap with a length of a maximum PUSCH schedulable by the DCI; or
a predefined value; or
a value configured via higher layer signaling.

Optionally, each of the N subfields has X bits, X being an integer greater than or equal to 1.

Optionally, X=1 if the HARQ-ACK codebook corresponding to the current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

Optionally, the information field of the DAI includes indication information of Y bits, the indication information jointly indicates the transmission of multiple HARQ-ACK codebooks on the PUSCH, Y being an integer greater than or equal to 1.

Optionally, the multiple HARQ-ACK codebooks are all semi-static codebooks, Y=1; wherein,
the indication information being 1 indicates that the multiple HARQ-ACK codebooks are all transmitted on the PUSCH, and the indication information being 0 indicates that the multiple HARQ-ACK codebooks are all not transmitted on the PUSCH.

Optionally, the multiple HARQ-ACK codebooks are dynamic codebooks not configured for CBG-based transmission, Y=K, K being an integer greater than or equal to 1; wherein,
the K-bit information indicates the maximum quantity of PDSCHs corresponding to the multiple HARQ-ACK codebooks.

Optionally, all the multiple HARQ-ACK codebooks are dynamic codebooks and there is at least one HARQ-ACK codebook configured for CBG-based transmission, Y=P+Q, P being an integer greater than or equal to 1, and Q being an integer greater than or equal to 1;
the P-bit information indicates the quantity of PDSCHs corresponding to a first sub-codebook or an HARQ-ACK codebook not configured for CBG-based transmission in the multiple HARQ-ACK codebooks, and the Q-bit information indicates the quantity of PDSCHs corresponding to the second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Optionally, the multiple HARQ-ACK codebooks include a semi-static codebook and a dynamic codebook, and all of the dynamic codebooks are not configured for CBG-based transmission, Y=1+K; wherein,
the 1-bit information indicates whether all semi-static codebooks of the multiple HARQ-ACK codebooks are transmitted on the PUSCH.

Optionally, the multiple HARQ-ACK codebooks include a semi-static codebook and a dynamic codebook, and there is at least one dynamic codebook configured for CBG-based transmission, Y=1+P+Q; wherein,
the 1-bit information indicates whether all the semi-static codebooks in the multiple HARQ-ACK codebooks are transmitted on the PUSCH.

Optionally, the multiple HARQ-ACK codebooks include a semi-static codebook and a dynamic codebook, Y being an integer greater than or equal to 2; wherein,
for the semi-static HARQ-ACK codebook, if the corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

It is to be noted that, the method works in coordination with the above-mentioned method for indicating transmission of hybrid automatic repeat request acknowledgment applied to user equipment, and accomplishes the multiplexing transmission of multiple HARQ-ACK codebooks on PUSCH. The implementations of embodiments of the above-mentioned method are applicable to this method, and can achieve the same technical effects.

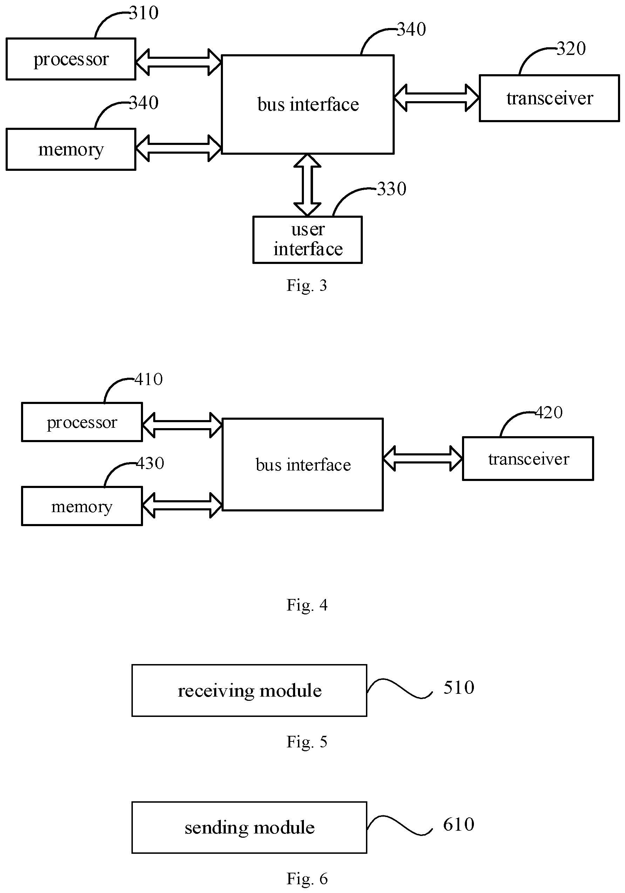

As shown in Fig. 3, an embodiment of the present disclosure further provides user equipment including a transceiver 320, a memory 340, a processor 310 and a computer program stored in the memory 340 and executable by the processor;
the transceiver 320 is used to: send a downlink assignment index (DAI), wherein the information field of the DAI indicates transmission of multiple HARQ-ACK codebooks on a physical uplink shared channel (PUSCH).

Optionally, the transceiver 320 is further used to receive downlink control information (DCI) from a network side device, wherein the DCI carries the DAI and is used to schedule the PUSCH.

Optionally, the information field of the DAI includes N subfields, each subfield indicates transmission of one HARQ-ACK codebook on the PUSCH, N being an integer greater than or equal to 2.

Optionally, the N is:
the quantity of subslots configured in one slot; or
the maximum quantity of subslots that overlap with a length of a maximum PUSCH schedulable by the DCI; or
a predefined value; or
a value configured via higher layer signaling.

Optionally, each of the N subfields has X bits, X being an integer greater than or equal to 1.

Optionally, X=1 if the HARQ-ACK codebook corresponding to the current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

Optionally, the information field of the DAI includes indication information of Y bits, the indication information jointly indicates the transmission of the multiple HARQ-ACK codebooks on the PUSCH, Y being an integer greater than or equal to 1.

Optionally, the multiple HARQ-ACK codebooks are all semi-static codebooks, Y=1; wherein,
the indication information being 1 indicates that the multiple HARQ-ACK codebooks are all transmitted on the PUSCH, and the indication information being 0 indicates that the multiple HARQ-ACK codebooks are all not transmitted on the PUSCH.

Optionally, all the multiple HARQ-ACK codebooks are dynamic codebooks not configured for CBG-based transmission, Y = K, K being an integer greater than or equal to 1; wherein,
the K-bit information indicates the maximum quantity of PDSCHs corresponding to the multiple HARQ-ACK codebooks.

Optionally, in case that a quantity of PDSCHs corresponding to a current HARQ-ACK codebook in the multiple HARQ-ACK codebooks is less than the maximum quantity of PDSCHs, a feedback position in the current HARQ-ACK codebook that corresponds to not-received PDSCH transmission is supplemented with negative acknowledgement (NACK).

Optionally, the multiple HARQ-ACK codebooks are all dynamic codebooks and there is at least one HARQ-ACK codebook configured for CBG-based transmission, Y=P+Q, P being an integer greater than or equal to 1 and Q being an integer greater than or equal to 1;
the P-bit information indicates the quantity of PDSCHs corresponding to a first sub-codebook or an HARQ-ACK codebook not configured for CBG-based transmission in the multiple HARQ-ACK codebooks, and the Q-bit information indicates the quantity of PDSCHs corresponding to the second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Optionally, the multiple HARQ-ACK codebooks include a semi-static codebook and a dynamic codebook, and all of the dynamic codebooks are not configured for CBG-based transmission, Y=1+K; wherein the 1-bit information indicates whether all the semi-static codebooks of the multiple HARQ-ACK codebooks are transmitted on the PUSCH.

Optionally, the multiple HARQ-ACK codebooks include a semi-static codebook and a dynamic codebook, and there is at least one dynamic codebook configured for CBG-based transmission, Y=1+P+Q; wherein,
the 1-bit information indicates whether all the semi-static codebooks in the multiple HARQ-ACK codebooks are transmitted on the PUSCH.

Optionally, the multiple HARQ-ACK codebooks include a semi-static codebook and a dynamic codebook, Y being an integer greater than or equal to 2; wherein,
for the semi-static HARQ-ACK codebook, if the corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

The user equipment receives a DAI from a network side device, and since the information field of the DAI indicates transmission of multiple HARQ-ACK codebooks on a PUSCH, an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

In Fig. 3, the bus architecture (represented by a bus) may include any quantity of interconnected buses and bridges, and may connect together various circuits such as one or more processors represented by the general purpose processor 310 and a memory represented by the memory 340. The bus may also connect together various other circuits such as peripherals, voltage regulators, and power management circuits, which are all known in the field, and therefore, will not be further described herein. The bus interface 340 provides an interface between the bus and the transceiver 320. The transceiver 320 may be a single element or multiple elements, such as multiple receivers and transmitters, to provide a unit for communicating with various other devices on the transmission medium. For example, the transceiver 320 receives external data from other devices. The transceiver 320 is used to send data processed by the processor 310 to other devices. Depending on the nature of the computing system, a user interface 330 may also be provided, such as a keypad, a display, a speaker, a microphone, a joystick.

The processor 310 is responsible for managing the bus and general processing, such as running a general purpose operating system, and the memory 340 can store data used by the processor 310 when performing operations.

Optionally, the processor 310 may be a central processing unit (CPU), an application specific integrated circuit (ASIC), a field programmable gate array (FPGA), or a complex programmable logic device (CPLD).

As shown in Fig. 4, an embodiment of the present disclosure also provides a network side device including a transceiver 420, a memory 430, a processor 410 and a computer program stored in the memory 430 and executable by the processor 410;
the transceiver 420 is used to send a downlink assignment index (DAI), wherein the information field of the DAI indicates transmission of multiple HARQ-ACK codebooks on a physical uplink shared channel (PUSCH).

Optionally, the transceiver 420 is further used to send a downlink control information DCI, wherein the DCI carries the DAI and is used to schedule the PUSCH.

Optionally, the information field of the DAI includes N subfields, each subfield indicates transmission of one HARQ-ACK codebook on the PUSCH, N being an integer greater than or equal to 2.

Optionally, the N is:
the quantity of subslots configured in one slot; or
the maximum quantity of subslots that overlap with a length of a maximum PUSCH schedulable by the DCI; or
a predefined value; or
a value configured via higher layer signaling.

Optionally, each of the N subfields has X bits, X being an integer greater than or equal to 1.

Optionally, X=1 if the HARQ-ACK codebook corresponding to the current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

Optionally, the information field of the DAI includes indication information of Y bits, and the indication information jointly indicates the transmission of the multiple HARQ-ACK codebooks on the PUSCH, Y being an integer greater than or equal to 1.

Optionally, the multiple HARQ-ACK codebooks are all semi-static codebooks, Y=1; wherein,
the indication information being 1 indicates that the multiple HARQ-ACK codebooks are all transmitted on the PUSCH, and the indication information being 0 indicates that the multiple HARQ-ACK codebooks are all not transmitted on the PUSCH.

Optionally, the multiple HARQ-ACK codebooks are dynamic codebooks not configured for CBG-based transmission, Y=K, K being an integer greater than or equal to 1; wherein
the K-bit information indicates the maximum quantity of PDSCHs corresponding to the multiple HARQ-ACK codebooks.

Optionally, the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1; wherein,
the P-bit information indicates the quantity of PDSCHs corresponding to a first sub-codebook or an HARQ-ACK codebook not configured for CBG-based transmission in the multiple HARQ-ACK codebooks, and the Q-bit information indicates the quantity of PDSCHs corresponding to a second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Optionally, the multiple HARQ-ACK codebooks include a semi-static codebook and a dynamic codebook, and all of the dynamic codebooks are not configured for CBG-based transmission, Y=1+K; wherein,
the 1-bit message indicates whether all semi-static codebooks of the multiple HARQ-ACK codebooks are transmitted on the PUSCH.

Optionally, the multiple HARQ-ACK codebooks include a semi-static codebook and a dynamic codebook, and there is at least one dynamic codebook configured for CBG-based transmission, Y=1+P+Q; wherein,
the 1-bit information indicates whether all semi-static codebooks in the multiple HARQ-ACK codebooks are transmitted on the PUSCH.

Optionally, the multiple HARQ-ACK codebooks include a semi-static codebook and a dynamic codebook, Y being an integer greater than or equal to 2; wherein,
for the semi-static HARQ-ACK codebook, if the corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

The network side device sends a DAI, wherein the information field of the DAI indicates transmission of multiple HARQ-ACK codebooks on a PUSCH, the user equipment receives the DAI, such that an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

The transceiver 420 is used to receive and send data under the control of processor 410. In Fig. 4, the bus architecture may include any quantity of interconnected buses and bridges, and connect various circuits such as one or more processors specifically represented by the processor 410 and the memory represented by the memory 430. The bus architecture can also connect various other circuits such as peripheral devices, voltage regulators, power management circuits, which are all known in the art, and therefore, will not be further described herein. The bus interface 440 provides the interface. The transceiver 420 may be a plurality of elements, that is, including a transmitter and a receiver, to provide a unit for communicating with various other devices on the transmission medium. The processor 410 is responsible for managing the bus architecture and general processing, and the memory 430 can store data used by the processor 410 when performing operations.

As shown in Fig. 5, an embodiment of the present disclosure further provides an apparatus for indicating transmission of hybrid automatic repeat request acknowledgment, including:
a receiving module 510, configured to receive a downlink assignment index (DAI) from a network side device, wherein the information field of the DAI indicates transmission of multiple hybrid automatic repeat request acknowledgment (HARQ-ACK) codebooks on a physical uplink shared channel (PUSCH).

Optionally, the receiving module 510 is further configured to: receive downlink control information (DCI) from a network side device, wherein the DCI carries the DAI and is used to schedule the PUSCH.

Optionally, the information field of the DAI includes N subfields, each subfield indicates transmission of one HARQ-ACK codebook on the PUSCH, N being an integer greater than or equal to 2.

Optionally, the N is:
the quantity of subslots configured in one slot; or
the maximum quantity of subslots that overlap with a length of a maximum PUSCH schedulable by the DCI; or
a predefined value; or
a value configured via higher layer signaling.

Optionally, each of the N subfields has X bits, X being an integer greater than or equal to 1.

Optionally, X=1 if the HARQ-ACK codebook corresponding to the current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

Optionally, the information field of the DAI includes indication information of Y bits, the indication information jointly indicates transmission of multiple HARQ-ACK codebooks on a PUSCH, Y being an integer greater than or equal to 1.

Optionally, the multiple HARQ-ACK codebooks are all semi-static codebooks, Y=1; wherein,
the indication information being 1 indicates that the multiple HARQ-ACK codebooks are all transmitted on the PUSCH, and the indication information being 0 indicates that the multiple HARQ-ACK codebooks are all not transmitted on the PUSCH.

Optionally, the multiple HARQ-ACK codebooks are dynamic codebooks not configured for CBG-based transmission, Y=K, K being an integer greater than or equal to 1; wherein,
the K-bit information indicates the maximum quantity of PDSCHs corresponding to the multiple HARQ-ACK codebooks.

Optionally, in case that a quantity of PDSCHs corresponding to a current HARQ-ACK codebook in the multiple HARQ-ACK codebooks is less than the maximum quantity of PDSCHs, a feedback position in the current HARQ-ACK codebook that corresponds to not-received PDSCH transmission is supplemented with negative acknowledgement (NACK).

Optionally, the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1;
the P-bit information indicates the quantity of PDSCHs corresponding to the first sub-codebook or the HARQ-ACK codebook not configured for CBG-based transmission in the multiple HARQ-ACK codebooks, and the Q-bit information indicates the quantity of PDSCHs corresponding to the second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Optionally, the multiple HARQ-ACK codebooks include a semi-static codebook and a dynamic codebook, and all of the dynamic codebooks are not configured for CBG-based transmission, Y=1+K; wherein the 1-bit information indicates whether all the semi-static codebooks of the multiple HARQ-ACK codebooks are transmitted on the PUSCH.

Optionally, the multiple HARQ-ACK codebooks include a semi-static codebook and a dynamic codebook, and there is at least one dynamic codebook configured for CBG-based transmission, Y=1+P+Q; wherein,
the 1-bit information indicates whether all semi-static codebooks in the multiple HARQ-ACK codebooks are transmitted on the PUSCH.

Optionally, the multiple HARQ-ACK codebooks include a semi-static codebook and a dynamic codebook, Y being an integer greater than or equal to 2; wherein,
for the semi-static HARQ-ACK codebook, if the corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

The apparatus receives a DAI from a network side device, and since the information field of the DAI indicates transmission of multiple HARQ-ACK codebooks on a PUSCH, an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

It is to be noted that the apparatus is an apparatus to which the above-mentioned method for indicating transmission of hybrid automatic repeat request acknowledgment applied to user equipment is applied, and the implementations of the embodiments of the above-mentioned method are applicable to the apparatus and can achieve the same technical effects.

As shown in Fig. 6, an embodiment of the present disclosure further provides an apparatus for indicating transmission of hybrid automatic repeat request acknowledgment, including:
a sending module 610, configured to send a downlink assignment index (DAI), wherein the information field of the DAI indicates transmission of multiple hybrid automatic repeat request acknowledgment (HARQ-ACK) codebooks on a physical uplink shared channel (PUSCH).

Optionally, the sending module 610 is further configured to: send a downlink control information (DCI), wherein the DCI carries the DAI and is used to schedule the PUSCH.

Optionally, the information field of the DAI includes N subfields, and each subfield indicates transmission of one HARQ-ACK codebook on the PUSCH, N being an integer greater than or equal to 2.

Optionally, the N is:
the quantity of subslots configured in one slot; or
the maximum quantity of subslots that overlap with a length of a maximum PUSCH schedulable by the DCI; or
a predefined value; or
a value configured via higher layer signaling.

Optionally, each of the N subfields has X bits, X being an integer greater than or equal to 1.

Optionally, X=1 if the HARQ-ACK codebook corresponding to the current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

Optionally, the information field of the DAI includes indication information of Y bits, the indication information jointly indicates transmission of multiple HARQ-ACK codebooks on a PUSCH, Y being an integer greater than or equal to 1.

Optionally, the multiple HARQ-ACK codebooks are all semi-static codebooks, Y=1; wherein,
the indication information being 1 indicates that the multiple HARQ-ACK codebooks are all transmitted on the PUSCH, and the indication information being 0 indicates that the multiple HARQ-ACK codebooks are all not transmitted on the PUSCH.

Optionally, the multiple HARQ-ACK codebooks are all dynamic codebooks not configured for CBG-based transmission, Y=K, K being an integer greater than or equal to 1; wherein,
the K-bit information indicates the maximum quantity of PDSCHs corresponding to the multiple HARQ-ACK codebooks.

Optionally, the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1; wherein,
the P-bit information indicates the quantity of PDSCHs corresponding to the first sub-codebook or the HARQ-ACK codebook not configured for CBG-based transmission in the multiple HARQ-ACK codebooks, and the Q-bit information indicates the quantity of PDSCHs corresponding to the second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

Optionally, the multiple HARQ-ACK codebooks include a semi-static codebook and a dynamic codebook, and all of the dynamic codebooks are not configured for CBG-based transmission, Y=1+K; wherein,
the 1-bit information indicates whether all the semi-static codebooks of the multiple HARQ-ACK codebooks are transmitted on the PUSCH.

Optionally, the multiple HARQ-ACK codebooks include a semi-static codebook and a dynamic codebook, and there is at least one dynamic codebook configured for CBG-based transmission, Y=1+P+Q; wherein,
the 1-bit information indicates whether all the semi-static codebooks in the multiple HARQ-ACK codebooks are transmitted on the PUSCH.

Optionally, the multiple HARQ-ACK codebooks include a semi-static codebook and a dynamic codebook, Y being an integer greater than or equal to 2; wherein,
for the semi-static HARQ-ACK codebook, if the corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

The apparatus sends a DAI, wherein the information field of the DAI indicates transmission of multiple HARQ-ACK codebooks on a PUSCH, the user equipment receives the DAI, such that an indication, based on the information field of the DAI, of multiplexing transmission of multiple HARQ-ACK codebooks on a PUSCH can be achieved, thus transmission performance when multiple HARQ-ACK codebooks is multiplexed on a PUSCH is ensured.

It is to be noted that the apparatus is an apparatus to which the above-mentioned method for indicating transmission of hybrid automatic repeat request acknowledgment applied to the network side device is applied, and the implementations of the embodiments of the above-mentioned method are applicable to the apparatus and can achieve the same technical effect.

Another embodiment of the present disclosure further provides a computer readable storage medium stored thereon a computer program, when executed by a processor, the computer program implements the steps in the method for indicating transmission of hybrid automatic repeat request acknowledgment applied to user equipment, or implements the steps in the method for indicating transmission of hybrid automatic repeat request acknowledgment applied to a network side device.

The computer readable storage medium includes permanent and non-permanent, removable and non-removable media, and may achieve information storage by any method or technique. The information may be computer readable instructions, data structures, program modules, or other data. Examples of computer storage media include, but are not limited to, phase-change random access memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cartridge tape, magnetic tape, magnetic disk storage or other magnetic storage device or any other non-transport medium which can be used to store information accessible by a computing device. As defined herein, computer readable medium does not include transitory computer readable media, such as modulated data signals and carriers.

It is further noted that the user equipment described in the present disclosure include, but are not limited to, smartphones, tablet computers, and etc., and that many of the functional components described are referred to as modules in order to particularly emphasize the independence of their implementation.

In the embodiments of the present disclosure, the modules may be implemented by software, so as to be executed by various types of processors. For example, an identified executable code module may include one or more physical or logical blocks of computer instructions, for example, it may be built as an object, process, or function. Nevertheless, the executable codes of the identified module do not need to be physically located together, but can include different instructions stored in different locations. When these instructions are logically combined together, they constitute a module and achieve the specified purpose of the module.

In fact, the executable code module can be a single piece of instruction or many pieces of instructions, and even may be distributed on multiple different code segments, distributed in different programs, or distributed across multiple storage devices. Likewise, operational data can be identified within the module, and can be implemented in any suitable form and organized in any suitable type of data structure. The operating data may be collected as a single data set, or may be distributed in different locations (e.g., on different storage devices), and may at least partly exist as electronic signals in a system or a network.

In the case that a module may be implemented in software, considering the hardware process level in the related art, a person skilled in the art may construct hardware corresponding to all modules that can be implemented in software, to achieve corresponding functions, if cost is not considered. The hardware circuit includes normal very large scale integration (VLSI) circuit or gate array, and semiconductor devices in the related art such as logic chip or transistor, or other discrete devices. The module may also be implemented with a programmable hardware device, such as a field programmable gate array, programmable logic array or programmable logic device.

The above exemplary embodiments are described with reference to the accompanying drawings, and many different forms and embodiments are feasible without departing from the spirit and contents of the present disclosure, and therefore, the present disclosure should not be constructed to be limited by the exemplary embodiments presented herein. More precisely, these exemplary embodiments are provided so that the present disclosure will be complete and will convey the scope of the present disclosure to those skilled in the art. In these drawings, component dimensions and relative dimensions may be exaggerated for the sake of clarity. The terms used herein are for the purpose of describing particular exemplary embodiments and are not intended to be limiting. As used herein, the singular forms "one", "a" and "the" are intended to include those plural forms unless the context clearly indicates otherwise. It is further understood that the terms "comprise" and/or "include", when used in this specification, denote the presence of the features, integers, steps, operations, members and/or components, but do not exclude the presence or addition of one or more other features, integers, steps, operations, members, components and/or components. Unless otherwise indicated, when stated, a range of values encompasses the upper and lower limits of the range and any subrange therebetween.

The above are optional implementations of the present disclosure. It should be pointed out that for a person skilled in the art, several improvements and modifications can be made without departing from the principles of the present disclosure. These improvements and modifications should also fall within the scope of the present disclosure.

## Claims

1. A method for indicating transmission of hybrid automatic repeat request acknowledgment, comprising:
receiving a downlink assignment index (DAI) from a network side device, wherein an information field of the DAI indicates transmission of multiple hybrid automatic repeat request acknowledgment (HARQ-ACK) codebooks on a physical uplink shared channel (PUSCH).

2. The method according to claim 1, wherein the receiving the DAI from the network side device comprises:
receiving downlink control information (DCI) from the network side device, wherein the DCI carries the DAI and is used to schedule the PUSCH.

3. The method according to claim 1, wherein the information field of the DAI comprises N subfields, each subfield indicating transmission of one HARQ-ACK codebook on the PUSCH, N being an integer greater than or equal to 2.

4. The method according to claim 3, wherein the N is:
a quantity of subslots configured in one slot; or
a maximum quantity of subslots that overlap with a length of a maximum PUSCH schedulable by the DCI; or
a predefined value; or
a value configured via higher layer signaling.

5. The method according to claim 3, wherein each of the N subfields has X bits, X being an integer greater than or equal to 1.

6. The method according to claim 5, wherein,
X=1 if the HARQ-ACK codebook corresponding to a current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

7. The method according to claim 1, wherein the information field of the DAI comprises indication information of Y bits, the indication information jointly indicating the transmission of the multiple HARQ-ACK codebooks on the PUSCH, Y being an integer greater than or equal to 1.

8. The method according to claim 7, wherein the multiple HARQ-ACK codebooks are all semi-static codebooks, Y=1;
the indication information being 1 indicates that the multiple HARQ-ACK codebooks are all transmitted on the PUSCH, and the indication information being 0 indicates that the multiple HARQ-ACK codebooks are all not transmitted on the PUSCH.

9. The method according to claim 7, wherein the multiple HARQ-ACK codebooks are all dynamic codebooks not configured for CBG-based transmission, Y=K, K being an integer greater than or equal to 1;
the K-bit information indicates a maximum quantity of physical downlink shared channels (PDSCH) corresponding to the multiple HARQ-ACK codebooks.

10. The method according to claim 9, wherein, a feedback position in the current HARQ-ACK codebook that corresponds to not-received PDSCH transmission is supplemented with negative acknowledgement (NACK) in case that a quantity of PDSCHs corresponding to a current HARQ-ACK codebook in the multiple HARQ-ACK codebooks is less than the maximum quantity of PDSCHs.

11. The method according to claim 7, wherein the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1;
the P-bit information indicates a quantity of PDSCHs corresponding to a first sub-codebook or an HARQ-ACK codebook not configured for CBG-based transmission in the multiple HARQ-ACK codebooks, and the Q-bit information indicates a quantity of PDSCHs corresponding to a second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

12. The method according to claim 9, wherein the multiple HARQ-ACK codebooks comprise a semi-static codebook and a dynamic codebook, and all of the dynamic codebooks are not configured for CBG-based transmission, Y=1+K;
the 1-bit information indicates whether all the semi-static codebooks in the multiple HARQ-ACK codebooks are transmitted on the PUSCH.

13. The method according to claim 11, wherein the multiple HARQ-ACK codebooks comprise a semi-static codebook and a dynamic codebook, and there is at least one dynamic codebook configured for CBG-based transmission, Y=1+P+Q;
the 1-bit information indicates whether all the semi-static codebooks in the multiple HARQ-ACK codebooks are transmitted on the PUSCH.

14. The method according to claim 7, wherein the multiple HARQ-ACK codebooks comprise a semi-static codebook and a dynamic codebook, Y being an integer greater than or equal to 2;
for the semi-static HARQ-ACK codebook, if corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

15. A method for indicating transmission of hybrid automatic repeat request acknowledgment, comprising:
sending a downlink assignment index (DAI), wherein an information field of the DAI indicates transmission of multiple hybrid automatic repeat request acknowledgment (HARQ-ACK) codebooks on a physical uplink shared channel (PUSCH).

16. The method according to claim 15, wherein the sending the DAI comprises:
sending downlink control information (DCI), wherein the DCI carries the DAI, and is used to schedule the PUSCH.

17. The method according to claim 15, wherein the information field of the DAI comprises N subfields, each subfield indicating transmission of one HARQ-ACK codebook on the PUSCH, N being an integer greater than or equal to 2.

18. The method according to claim 17, wherein the N is:
a quantity of subslots configured in one slot; or
a maximum quantity of subslots that overlap with a length of a maximum PUSCH schedulable by the DCI; or
a predefined value; or
a value configured via higher layer signaling.

19. The method according to claim 17, wherein each of the N subfields has X bits, X being an integer greater than or equal to 1.

20. The method according to claim 19, wherein,
X=1 if the HARQ-ACK codebook corresponding to a current subfield is a semi-static codebook;
X=2 if the HARQ-ACK codebook corresponding to the current subfield is a dynamic codebook not configured for code block group (CBG)-based transmission;
X=4 if the HARQ-ACK codebook corresponding to the current subfield is a dynamic codebook configured for CBG-based transmission.

21. The method according to claim 15, wherein the information field of the DAI comprises indication information of Y bits, the indication information jointly indicating the transmission of the multiple HARQ-ACK codebooks on the PUSCH, Y being an integer greater than or equal to 1.

22. The method according to claim 21, wherein the multiple HARQ-ACK codebooks are all semi-static codebooks, Y=1;
the indication information being 1 indicates that the multiple HARQ-ACK codebooks are all transmitted on the PUSCH, and the indication information being 0 indicates that the multiple HARQ-ACK codebooks are all not transmitted on the PUSCH.

23. The method according to claim 21, wherein the multiple HARQ-ACK codebooks are all dynamic codebooks not configured for CBG-based transmission, Y=K, K being an integer greater than or equal to 1;
the K-bit indication information indicates a maximum quantity of PDSCHs corresponding to the multiple HARQ-ACK codebooks.

24. The method according to claim 21, wherein the multiple HARQ-ACK codebooks are all dynamic codebooks and there is at least one HARQ-ACK codebook configured for CBG-based transmission, Y=P+Q, P being an integer greater than or equal to 1, and Q being an integer greater than or equal to 1;
the P-bit information indicates a quantity of PDSCHs corresponding to a first sub-codebook or an HARQ-ACK codebook not configured for CBG-based transmission in the multiple HARQ-ACK codebooks, and the Q-bit information indicates a quantity of PDSCHs corresponding to a second sub-codebook in the multiple HARQ-ACK codebooks;
the first sub-codebook is a sub-codebook corresponding to transport block (TB)-based transmission, and the second sub-codebook is a sub-codebook corresponding to CBG-based transmission.

25. The method according to claim 23, wherein the multiple HARQ-ACK codebooks comprise a semi-static codebook and a dynamic codebook, and all of the dynamic codebooks are not configured for CBG-based transmission, Y=1+K;
the 1-bit information indicates whether all the semi-static codebooks in the multiple HARQ-ACK codebooks are transmitted on the PUSCH.

26. The method according to claim 24, wherein the multiple HARQ-ACK codebooks comprise a semi-static codebook and a dynamic codebook, and there is at least one dynamic codebook configured for CBG-based transmission, Y=1+P+Q;
the 1-bit information indicates whether all the semi-static codebooks in the multiple HARQ-ACK codebooks are transmitted on the PUSCH.

27. The method according to claim 21, wherein, the multiple HARQ-ACK codebooks comprise a semi-static codebook and a dynamic codebook, Y being an integer greater than or equal to 2;
for the semi-static HARQ-ACK codebook, if corresponding PDSCH transmission is not received by user equipment, and the indication information indicates that there is no corresponding PDSCH transmission, the semi-static HARQ-ACK codebook is not transmitted on the PUSCH; otherwise, the semi-static HARQ-ACK codebook is transmitted on the PUSCH;
for the dynamic HARQ-ACK codebook, if the corresponding PDSCH transmission is not received by the user equipment, and the indication information indicates that there is no corresponding PDSCH transmission, the dynamic HARQ-ACK codebook is not transmitted on the PUSCH; otherwise, the dynamic HARQ-ACK codebook is transmitted on the PUSCH.

28. User equipment, comprising a transceiver, a memory, a processor and a computer program stored in the memory and configured to be executed by the processor; wherein the transceiver is used for:
receiving a downlink assignment index (DAI) from a network side device, wherein an information field of the DAI indicates transmission of multiple hybrid automatic repeat request acknowledgment (HARQ-ACK) codebooks on a physical uplink shared channel (PUSCH).

29. A network side device, comprising a transceiver, a memory, a processor and a computer program stored in the memory and configured to be executed by the processor; wherein the transceiver is used for:
sending a downlink assignment index (DAI), wherein an information field of the DAI indicates transmission of multiple hybrid automatic repeat request acknowledgment (HARQ-ACK) codebooks on a physical uplink shared channel (PUSCH).

30. An apparatus for indicating transmission of hybrid automatic repeat request acknowledgment, comprising:
a receiving module, configured to receive a downlink assignment index (DAI) from a network side device, wherein an information field of the DAI indicates transmission of multiple hybrid automatic repeat request acknowledgment (HARQ-ACK) codebooks on a physical uplink shared channel (PUSCH).

31. An apparatus for indicating transmission of hybrid automatic repeat request acknowledgment, comprising:
a sending module, configured to send a downlink assignment index (DAI), wherein an information field of the DAI indicates transmission of multiple hybrid automatic repeat request acknowledgment (HARQ-ACK) codebooks on a physical uplink shared channel (PUSCH).

32. A computer-readable storage medium storing thereon a computer program, wherein, the computer program is configured to be executed by a processor to implement the steps of the method for indicating transmission of hybrid automatic repeat request acknowledgment according to any one of claims 1 to 14 or the steps of the method for indicating transmission of hybrid automatic repeat request acknowledgment according to any one of claims 15 to 27.
